Europäisches Patentamt

European Patent Office

Office européen des brevets

(19)

(11) **EP 0 715 198 A1**

(12) **EUROPEAN PATENT APPLICATION**

(43) Date of publication:
05.06.1996 Bulletin 1996/23

(51) Int. Cl.$^6$: **G02B 21/22**, G02B 27/26

(21) Application number: 95402688.6

(22) Date of filing: 29.11.1995

(84) Designated Contracting States:
**DE FR GB IT SE**

(30) Priority: 29.11.1994 JP 295376/94
20.09.1995 JP 242193/95
20.09.1995 JP 266377/95

(71) Applicant: **TERUMO KABUSHIKI KAISHA**
**Tokyo (JP)**

(72) Inventors:
• **Nakamura, Toshihisa**
 **Ashigarakami-gun, Kanagawa-ken (JP)**
• **Hattori, Tomohiko**
 **Ashigarakami-gun, Kanagawa-ken (JP)**

(74) Representative: **Joly, Jean-Jacques et al**
 **Cabinet Beau de Loménie**
 **158, rue de l'Université**
 **F-75340 Paris Cédex 07 (FR)**

(54) **Microscope system**

(57) A microscope apparatus for stereoscopic observation with one lens includes a microscope (1000) having an optical system including a phase shifter (201) that solves the problem of inbalance in intensity between two polarized light compounds incident on the microscope 1000, polarization filter 2022 and 202R, that transfers first and second image light components which have a parallax therebetween and which can be separated from each other, a memory (114) for storing a predetermined coefficient a based on the shape, length, and the like of the optical system and a CCD (105) for converting the first and second image light components into first and second image signals (A,B). The microscope apparatus generates first and second image data (L,R) by performing proportional distribution of the first and second image signals in accordance with the predetermined coefficient.

**F I G. 2**

EP 0 715 198 A1

**Description**

BACKGROUND OF THE INVENTION

The present invention relates to an image processing apparatus for a microscope that can perform stereoscopic observation with one lens, a microscope apparatus for image-processing an image sent from this microscope in order to visually display it, a method of controlling this microscope, and an objective adapter of this microscope.

Conventionally, an optical microscope transfers an enlarged image of an observation target object to an observer or an output apparatus through an appropriate combination of an eyepiece and an objective lens. However, it is difficult to obtain information on the depth of an object from an image sent from a single-lens optical microscope, and thus it is difficult to perform an operation while observing an enlarged image.

A stereoscopic microscope is commercially available in which two parallax images are received by two objective lenses and transferred to the right and left eyes of the observer through two image transfer optical systems, so that the observation image becomes stereoscopic. However, as this stereoscopic microscope requires a plurality of optical systems, its structure is complicated, leading to a high cost.

In order to solve the complexity of this arrangement, Japanese Utility-Model Publication for Opposition (Kokoku) No. 47-18686 discloses a method of transferring parallax images of a pair of polarization filters having different polarization azimuths by a single optical system. More specifically, in this conventional stereoscopic microscope, a pair of polarization filters having different polarization azimuths are divisionally disposed at or near the effective center serving as the position of the aperture of an observation lens in the direction of the optical axis. This pair of polarization filters generate parallax images in the effective aperture of the observation to convert into two polarized images, and propagate the polarized images through the microscope. These two polarized images are sensed in the time-interlace or time-parallel manner and converted into image output signals, and the image output signals are input to a stereoscopic image display unit. The observer observes the images on the display unit as stereoscopic images.

An example of a problem that occurs when converting images obtained by a single observation lens into two polarized images by two polarization filters and propagating the two polarized images through one optical transfer path includes two problems; first, shift of the polarization axis of propagating light; and second, the unbalance in intensity between the two polarized light components.

The shift in polarization axis of propagating light is a change in plane of polarization of certain linearly polarized light (e.g., polarized light having only an X-axis component and not having a Y-axis component) while the linearly polarized light is transmitted through a large number of optical members, thus gradually shifting the plane of polarization. As a result of this shift, the linearly polarized light becomes to have a Y-axis component as well, thus causing crosstalk in that a right-eye (or left-eye) image is included in a left-eye (or right-eye) image in stereoscopic display.

The second problem of unbalance in intensity between the two polarized light components is caused by the following reason. More specifically, object light emerging from an observation target object is polarized depending on the surface state and material of the target object. A stereoscopic microscope employing one observation lens can obtain good stereoscopic images only when the intensities of two polarized light components in light incident on the observation lens are equal to each other. As described above, when the polarized state of object light itself is unbalanced (for example, assuming that the two polarization axes are X and Y, an X-polarized light component intensity is higher than a Y-polarized light component intensity), the light itself which is incident on the observation lens has polarization characteristics. If the pair of polarization filters are set in advance such that one filter transmits only an X-polarized light component (left-eye image light component) and the other filter transmits only a Y-polarized light component (right-eye image light component), unbalance in intensity (the left-eye image intensity is higher than the right-eye image intensity) occurs between two polarized light components obtained by this pair of filters.

SUMMARY OF THE INVENTION

The present invention has been made in view of the above problems, and has as its object to provide an image processing apparatus for a microscope that can generate image data from two image light components whose polarized states have been changed as they are transferred through one optical system, based on image light whose polarized state has not been changed, thus enabling employment of, e.g., an inexpensive optical path, in a microscope.

In order to achieve this object, according to the present invention, there is provided an image processing apparatus for a microscope having an optical system that transfers first and second image light components which have a parallax therebetween and which can be separated from each other, comprising

coefficient determining means for determining a predetermined coefficient based on a shape of the optical system,

converting means for converting the first and second image light components into first and second image signals, and

generating means for generating first and second image data by performing proportional distribution of the first and second image signals in accordance with the predetermined coefficient.

While two polarized light components pass through the optical system, their planes of polarization shift.

When the plane of polarization of one polarized light component shifts, this polarized light component becomes the other polarized light component. Similarly, when the plane of polarization of the other polarized light component shifts, this polarized light becomes one polarized light component. This change in polarized state is mainly determined by conditions of used optical elements (e.g., the number and the diameters of the used lenses) and the material of the optical system. When a coefficient is determined based on the shape and material of the optical system, and the first and second image data are generated by performing proportional distribution of the first and second image signals (usually electrical signals output from an image sensing element, e.g., a CCD) in accordance with the predetermined coefficient, these image data exhibit values close to those of image data obtained from image signals that are obtained from image light components whose polarized states probably do not change. Accordingly, when this image processing apparatus is used, an expensive optical system, e.g., a special lens which holds a plane of polarization, need not be employed in the microscope.

It is another object of the present invention to provide a microscope apparatus which can separate at high precision two polarized images sent from a microscope having one optical system that allows a change in polarized state of image light upon transfer.

In order to achieve this object, according to the present invention, there is provided a microscope apparatus comprising

a microscope having an optical system that transfers first and second image light components which have a parallax therebetween and which can be separated from each other,

coefficient determining means for determining a predetermined coefficient based on a shape of the optical system,

converting means for converting the first and second image light components into first and second image signals, and

generating means for generating first and second image data by performing proportional distribution of the first and second image signals in accordance with the predetermined coefficient.

More specifically, this microscope apparatus can provide a system that does not require a special optical system, e.g., one that holds a plane of polarization and that can generate two image data, which are separated from each other at high precision, from two image light components (having planes of polarization shifted from each other) sent from a microscope having an inexpensive optical system.

It is still another object of the present invention to provide a microscope controlling method that enables high-precision separation of two polarized images sent from a microscope using an inexpensive optical system.

In order to achieve this object, according to the present invention, there is provided a method of controlling a microscope having an optical system that transfers first and second image light components which have a parallax therebetween and which can be separated from each other, comprising the steps of

converting the first and second image light components into first and second image signals by controlling an image sensing element, and

generating first and second image data by performing proportional distribution of the first and second image signals based on conversion characteristics of the image sensing element and a predetermined coefficient representing a shape of the optical system.

With this controlling method, although the two image light components obtained by a microscope, that does not require a special optical system for preserving a plane of polarization and that has an inexpensive optical system, have planes of polarization that are shifted from each other, two image data can be generated in which the two image light components are separated from each other at high precision.

According to an aspect of the present invention, the optical system has an optical path, and the predetermined coefficient is expressed as the function of at least one of the material, diameter, and number of members in the optical path. A ratio with which the polarized states of the two polarized light components change in the optical system can be quantified at high precision.

According to still another aspect of the present invention, the predetermined coefficient is stored in storage means in advance as a function value having the condition of the optical system as a parameter. The predetermined coefficient required for executing proportional distribution can be easily extracted, so that image data can be generated efficiently.

According to still another aspect of the present invention, the converting means has an image sensing element (e.g., a CCD) for converting the first and second image light components into the first and second image signals as electrical signals, and inverting means for inverting the first and second image signals sent from the image sensing element into first and second light intensity data representing light intensities. As an output (usually an electrical signal) from the image sensing element is not linearly related to the intensity of the incident light, high-precision proportional distribution cannot be executed by directly using the first and second image signals. However, when the first and second image signals are inverted into the first and second light intensity data representing the light intensity, proportional distribution can be performed in accordance with the predetermined coefficient.

According to still another aspect of the present invention, the first and second image light components in the optical system are polarized substantially differently from each other.

According to still another aspect of the present invention, the first and second image data are stored or displayed for the convenience of later use, thereby improving the practicality.

The image processing apparatus and the controlling method of the present invention can be applied to various types of microscopes.

For example, according to still another aspect of the present invention, the optical system of the microscope has an optical path, an incident portion provided to a distal end side of the optical path, and an exit portion provided to a proximal end side of the optical path, and the incident portion has a pair of polarization filters which are provided at an effective center serving as an aperture in a direction of an optical axis or in a vicinity thereof, which have different polarization azimuths, and which are divisionally disposed on right and left regions of a plane substantially perpendicular to the optical axis. In this microscope, two polarization filters can be appropriately arranged in one optical path. Accordingly, the pair of polarization filters have semicircular shapes.

For example, according to still another aspect of the present invention, the optical system of the microscope has an optical path, an incident portion provided to a distal end side of the optical path, and an exit portion provided to a proximal end side of the optical path, and

the exit portion has polarization axis rotating means for rotating polarization axes of two polarized images passing through the optical path in a time-interlace manner, and a photodetector provided behind the rotating means.

With this microscope, although the obtained images are divided in the time-interlace manner, the arrangement of the exit portion is simplified.

For example, according to still another aspect of the present invention, the optical system of the microscope has an optical path, an incident portion provided to a distal end side of the optical path, and an exit portion provided to a proximal end side of the optical path, and

the exit portion has a beam splitter for separating optical paths of two polarized images passing through the optical path, and a pair of polarization filters respectively passing the separated polarized images therethrough and having polarization azimuths different from each other.

With this microscope, two time-parallel image data can be obtained.

It is still another object of the present invention to provide an objective adapter for a microscope that is suitable for the above microscope apparatus and can adjust the angle of plane of polarization in the barrel.

In order to achieve this object, according to the present invention, there is provided an objective adapter of a microscope having an objective lens in a barrel thereof, comprising

a pair of polarization filters arranged side by side at an effective center serving as a stop of the objective lens in a direction of a plane perpendicular to an optical axis of the barrel, and

means for rotating the pair of polarization filters about the optical axis in the barrel as a center.

According to still another aspect of the present invention, the barrel has a first barrel portion for supporting at least the pair of polarization filters and a second barrel portion for supporting a remaining portion of the adapter, the first barrel portion being supported to be pivotal with respect to the second barrel portion, and

at least one of the first and second barrel portions is formed with a scale for aiding visual observation of a pivot amount of the first barrel portion.

According to still another aspect of the present invention, the pair of polarization filters have semicircular shapes and substantially form a circle when fitted with each other.

It is still another object of the present invention to provide an image processing apparatus for a microscope that can generate image data from two image light components whose polarized states have been changed upon transfer through one optical system, based on image light components whose polarized states have not been changed, thereby enabling use of an inexpensive optical transmission system, in a microscope.

In order to achieve this object, according to the present invention, there is provided an image processing apparatus for a microscope having an optical system that transfers first and second image light components which have a parallax therebetween and which can be separated from each other, the apparatus comprising

converting means for converting the first and second image light components into first and second image signals, and

generating means for generating first and second image data by performing proportional distribution of the first and second image signals in accordance with a predetermined coefficient.

While two polarized light components pass through the optical system, their planes of polarization shift. When the plane of polarization of one polarized light component shifts, this polarized light component becomes the other polarized light component. Similarly, when the plane of polarization of the other polarized light component shifts, this polarized light component becomes the first polarized light component. This change in polarized state is mainly determined by the conditions of the optical system (e.g., the number or material of lenses used in the system, a diameter of the system) and the material of the optical system. When a coefficient is determined based on the conditions and material of the optical system, and the first and second image data are generated by performing proportional distribution of the first and second image signals (usually electrical signals output from an image sensing element, e.g., a CCD) in accordance with the predetermined coefficient, these image data exhibit values close to those of image data obtained from image signals that are obtained from image light components whose polarized states probably do not change. Accordingly, when this image processing apparatus is used, an expensive optical element which has a characteristc of preserving polarization, need not be employed in the microscope.

It is still another object of the present invention to provide a microscope system that can separate, at high precision, two polarized images sent from a microscope having one optical system that allows a change in the polarized state of image light that occurs upon transfer.

In order to achieve this object, according to the present invention, there is provided a microscope system comprising

a microscope having an optical system that transfers first and second image light components which have a parallax therebetween and which can be separated from each other,

converting means for converting the first and second image light components into first and second image signals, and

generating means for generating first and second image data by performing proportional distribution of the first and second image signals in accordance with a predetermined coefficient.

More specifically, this microscope system can provide a system that does not require a special optical element which has a polarization preserving characteristic and that can generate two image data, which are separated from each other at high precision, from two image light components (having planes of polarization shifted from each other) sent from a microscope having an inexpensive optical system.

It is still another object of the present invention to provide a microscope controlling method that enables high-precision separation of two polarized images sent from a microscope using an inexpensive optical system.

In order to achieve this object, according to the present invention, there is provided a method of controlling a microscope having an optical system that transfers first and second image light components which have a parallax therebetween and which can be separated from each other, comprising the steps of

converting the first and second image light components into first and second image signals by controlling an image sensing element, and

generating first and second image data by performing proportional distribution of the first and second image signals based on conversion characteristics of the image sensing element and a predetermined coefficient representing a shape of the optical system.

With this controlling method, although the two image light components obtained by a microscope, that does not require a special optical element which has a polarization preserving characteristic and that has an inexpensive optical system, have planes of polarization that are shifted from each other, two image data can be generated in which the two image light components are separated from each other at high precision.

According to still another aspect of the present invention, the optical system comprises a relay lens system, and the predetermined coefficient is expressed as the function of at least one of the material, diameter of the relay lens system, and the number of lenses used in the system. A ratio with which the polarized states of the two polarized light components change in the optical system can be quantified at high precision.

According to still another aspect of the present invention, the predetermined coefficient is stored in storage means in advance as a function value having the shape of the optical system as a parameter. The predetermined coefficient required for executing proportional distribution can be easily extracted, so that image data can be generated efficiently.

According to still another aspect of the present invention, the converting means has an image sensing element (e.g., a CCD) for converting the first and second image light components into the first and second image signals as electrical signals, and inverting means for inverting the first and second image signals sent from the image sensing element into first and second light intensity data representing light intensities. As an output (usually an electrical signal) from the image sensing element is not linearly related to the intensity of the incident light, high-precision proportional distribution cannot be executed by directly using the first and second image signals. However, when the first and second image signals are inverted into the first and second light intensity data representing the light intensity, proportional distribution can be performed in accordance with the predetermined coefficient.

According to still another aspect of the present invention, the first and second image light components in the optical system are polarized substantially differently from each other.

According to still another aspect of the present invention, the first and second image data are stored or displayed for the convenience of later use, thereby improving the practicality.

The image processing apparatus and the controlling method of the present invention can be applied to various types of microscopes.

For example, according to still another aspect of the present invention, the optical system of the microscope has a relay lens system, an incident portion provided to a distal end side of the relay lens system, and an exit portion provided to a proximal end side of the relay lens system, and the incident portion has a pair of polarization filters which are provided at an effective center serving as an aperture in a direction of an optical axis or in a vicinity thereof, which have different polarization azimuths, and which are divisionally disposed into right and left regions of a plane substantially perpendicular to the optical axis. In this microscope, two polarization filters can be appropriately arranged in one relay lens system. Accordingly, the pair of polarization filters have semicircular shapes.

For example, according to still another aspect of the present invention, the optical system of the microscope has a relay lens system, an incident portion provided to a distal end side of the relay lens system, and an exit portion provided to a proximal end side of the relay lens system, and

the exit portion has polarization axis rotating means for rotating polarization axes of two polarized images passing through the relay lens system in a time-interlace manner, and a photodetector provided behind the rotating means.

With this microscope, although the obtained images are divided in the time-interlace manner, the arrangement of the exit portion is simplified.

For example, according to still another aspect of the present invention, the optical system of the microscope has a relay lens system, an incident portion provided to a distal end side of the relay lens system, and an exit portion provided to a proximal end side of the relay lens system, and

the exit portion has a beam splitter for separating optical paths of the two polarized images passing through the relay lens system, and a pair of polarization filters respectively passing the separated polarized images therethrough and having polarization azimuths different from each other.

With this microscope, two time-parallel image data can be obtained.

For example, according to still another aspect of the present invention, the optical system of the microscope has a relay lens system, an incident portion provided to a distal end side of the relay lens system, and an exit portion provided to a proximal end side of the relay lens system, and

the exit portion has a pair of polarization filters provided in a vicinity of an exit port of the relay lens system to be close to each other and having different polarization azimuths in order to pass the two polarized images sent from the relay lens system therethrough.

With this microscope, two time-parallel image data can be obtained with a simple arrangement.

According to another aspect of the present invention, the optical system of the microscope has a relay lens system, an incident portion provided to a distal end side of the relay lens system, and an exit portion provided to a proximal end side of the relay lens system, and

the exit portion has a first group of a plurality of polarization filters and a second group of a plurality of polarization filters, having polarization azimuths that are different from each other, for passing the two polarized images sent from the relay lens system therethrough.

With this microscope, two time-interlace image data can be obtained.

According to still another aspect of the present invention, the microscope has a light guide disposed in the vicinity of the optical system. With this microscope, illumination can be assured.

According to still another aspect of the present invention, the optical system of the microscope has a relay lens system, an incident portion provided to a distal end side of the relay lens system, and an exit portion provided to a proximal end side of the relay lens system, and

the exit portion has an illumination light source provided in the vicinity thereof, and means for guiding illumination light emitted from the light source to the exit side for the polarized images of the relay lens system. With this microscope, the relay lens system can be made bidirectional so that it can serve as an object illumination light guide as well.

According to still another aspect of the present invention, the optical system of the microscope has a relay lens system, an incident portion provided to a distal end side of the relay lens system, and an exit portion provided to a proximal end side of the relay lens system, and

the incident portion further has an image reflecting member at a distal end thereof. With this microscope, the side surfaces and the upper and lower surfaces of the distal end of the incident portion can be observed.

According to still another aspect of the present invention, the optical system preferably has an imaging member, e.g., a convex lens, a concave lens, a Fresnel lens, or a SELFOC lens, or a combination of a plurality of lenses.

According to still another aspect of the present invention, the optical system of the microscope has an optical transfer path comprising a relay lens, an incident portion provided to a distal end side of the optical transfer path, and an exit portion provided to a proximal end side of the optical transfer path.

According to still another aspect of the present invention, the microscope has a pair of solid-state image sensing elements behind its optical system.

It is still another object of the present invention to provide a stereoscopic microscope which converts two polarized images into two parallax images and transfers them as right- and left-eye images, wherein even when incident light itself to an observation lens has polarization characteristics, high-quality stereoscopic observation is enabled by solving the nonuniformity in polarized state existing in the incident light.

In order to achieve the above object, there is provided a microscope for separating image light incident through an observation lens into two polarization images, propagating the two polarization images through one optical path, and using the two polarized images as two parallax images, comprising

equalizing means, provided in front of the observation lens, for equalizing two polarized light components of incident light, and optical means for separating the incident light having two equalized polarized light components into two polarized images,

whereby intensities of the two parallax images obtained by the optical means become equal.

According to still another aspect of the present invention, the equalizing means is made of a material having such optical characteristics that it solves polarization characteristics of the incident light.

According to still another aspect of the present invention, the equalizing means has means, e.g., a phase shifter, for rotating the polarization azimuth of the incident light.

According to still another aspect of the present invention, the equalizing means has first and second light-transmitting elements having equal areas. The first light-transmitting element shifts the phase of the polarization azimuth of transmitted light with a shift amount which is shifted by 90° from a shift amount with which the second light-transmitting element shifts the phase of the polarization azimuth of transmitted light. Since the areas of the first and second light-transmitting elements are equal, the light intensities of the two polarized light components incident on the optical means become equal to each other.

According to still another aspect of the present invention, the first light-transmitting element is constituted by a semicircular λ/2-phase shifter, and the second light-transmitting element is constituted by a light-transmitting plate that does not change a semicircular phase.

According to still another aspect of the present invention, the line that divides the first and second light-transmitting elements is perpendicular or parallel to a dividing direction of the optical means.

According to still another aspect of the present invention, the equalizing means has first and second light-transmitting elements having equal areas, the first light-transmitting element is constituted by a plurality of small regions, and the first light-transmitting element shifts the phase of the polarization azimuth of transmitted light with a shift amount which is shifted by 90° from a shift amount with which the second light-transmitting element shifts the phase of the polarization azimuth of transmitted light.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1A is a schematic diagram showing the principle arrangement of a microscope system as a preferable embodiment of the present invention that has a polarization intensity correcting function and a polarization shift compensating function;

Fig. 1B shows the arrangement of a phase shifter used in the microscope of Fig. 1A;

Fig. 2 shows the arrangement of a microscope system according to the first embodiment of the present invention;

Fig. 3 is a sectional view showing the arrangement of the incident portion of the microscope of the first embodiment;

Fig. 4 shows the arrangement of part of an optical system at the incident portion of the microscope of the first embodiment;

Fig. 5A shows an example of the relationship in polarizing direction between a phase shifter 201 and a polarization filter 202 of the incident portion of the first embodiment;

Fig. 5B shows another example of the relationship in polarizing direction between the phase shifter 201 and the polarization filter 202 of the incident portion of the first embodiment;

Fig. 5C shows still another example of the relationship in polarizing direction between the phase shifter 201 and the polarization filter 202 of the incident portion of the first embodiment;

Fig. 6 shows the arrangement of the exit portion of the microscope of the first embodiment;

Fig. 7 is a diagram for explaining the principle of separating two polarized light components in the first embodiment;

Fig. 8 is a graph for explaining the principle of photoelectric conversion of the first embodiment;

Fig. 9 shows the arrangement of a microscope system according to the second embodiment of the present invention;

Fig. 10 is a diagram for explaining the principle of separating two polarized light components of the second embodiment;

Fig. 11 is a sectional view showing the arrangement of an objective lens unit used in the microscope system of the second embodiment;

Fig. 12 is a perspective view of the unit of Fig. 11;

Fig. 13 shows the arrangement of polarization filters in the objective lens unit of the second embodiment;

Fig. 14 shows an example of the arrangement of the image output side of the microscope of the second embodiment;

Fig. 15 is a timing chart of the control signal of the second embodiment;

Fig. 16 shows another example of the arrangement of the image output side of the second embodiment;

Fig. 17 shows an arrangement of the objective lens unit of a microscope according to the third embodiment;

Fig. 18 shows another arrangement of the objective lens unit of the microscope of the third embodiment;

Fig. 19 shows still another arrangement of the objective lens unit of the microscope of the third embodiment;

Fig. 20 shows the arrangement of the eyepiece unit of a microscope according to the fourth embodiment; and

Fig. 21 shows the arrangement of spectacles used in an eyepiece unit according to the fifth embodiment.

DETAILED DESCRIPTION OF THE PREFERRED EMBODIMENTS

A microscope system to which the present invention is applied will be described in detail with reference to the accompanying drawings.

⟨Overall Arrangement of Microscope System⟩

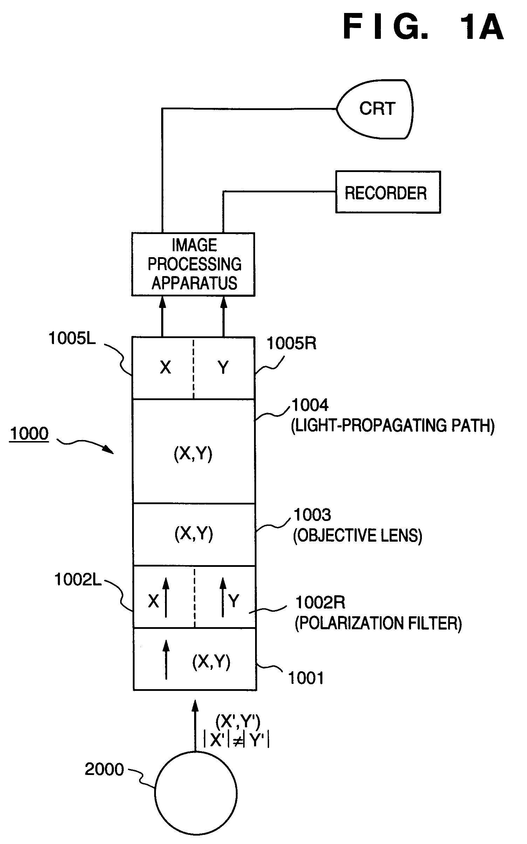

Fig. 1A schematically shows the arrangement of a microscope apparatus system having a microscope to which the present invention is applied. In this specification, a unit which includes an optical system, e.g., an objective lens, and externally extracts the front image of an observation target object 2000 will be referred to as a "microscope" (1000 in Fig. 1A); a unit for processing an image signal (usually an electrical signal) obtained by conversion from image light obtained by this microscope, thereby obtaining a visual image, will be referred to as an "image processing apparatus" (500 in Fig. 1A) of the microscope; and a system comprising the "microscope" and the "image processing apparatus" will be referred to as a "microscope apparatus system" (or a microscope system).

The microscope 1000 of this embodiment has three main optical systems, i.e., a light amount equalizer unit 1001, a polarization filter unit 1002, and an objective lens 1003.

Reference numeral 2000 denotes an observation target object; and 2001, light emerging from the observation target object 2000. Usually, the light 2001 is polarized. The light 2001 has two polarized light components. For the sake of descriptive convenience, the two polarized light components are denoted by X' and Y', and their respective polarization azimuths are denoted by X and Y. Although it suffices in principle if these polarization azimuths are different and they need not be orthogonal, for the sake of descriptive convenience, they are determined to be orthogonal and are expressed as $X \perp Y$. Generally, the intensities of arbitrary two polarized light components in reflected light often differ from each other. Accordingly, the intensities of the above two polarized light components X' and Y' are not also equal, which is expressed as $|X'| \neq |Y'|$ in Fig. 1A.

The light amount equalizer unit 1001 has a phase shifter, e.g., a $\lambda/2$ plate, as will be described later, and has a function of equalizing the intensities of the two polarized light components X' and Y' contained in light emerging from the observation target object 2000, in order to eliminate the non-equality of the light amounts of the two polarized light components X' and Y'. The equalized intensities are expressed as $|X| = |Y|$ . In Fig. 1A, the two overlapping polarized light components X and Y are expressed as (X,Y) for the sake of descriptive convenience. The light amount equalizer unit 1001 transfers light containing these two polarized light components X and Y to the preceding polarization filter unit 1002.

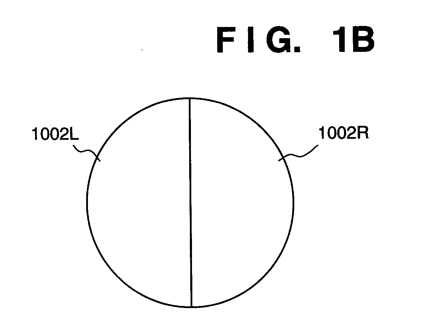

The polarization filter unit 1002 separates and extracts the polarized light components X and Y from the light including the overlapping polarized light components X and Y. As shown in Fig. 1B, the polarization filter unit 1002 has two filter portions 1002L and 1002R having the same area. The filter portion 1002L passes only the X-polarized light component therethrough, and the filter portion 1002R passes only the Y-polarized light component therethrough. Since the two filter portions 1002L and 1002R are separated, the polarized light component X passing through the filter portion 1002L forms an image for the observer's left eye, and the polarized light component Y passing through the filter portion 1002R forms an image for the observer's right eye.

Both the polarized light components X and Y emerging from the polarization filter unit 1002 are incident on the objective lens 1003. In the objective lens 1003, the two polarized light components X and Y overlap. This is expressed as (X,Y). The objective lens 1003 guides the two overlapping polarized light components (X,Y) to a barrel 1004. The two polarized light components (X,Y) propagate through the image guide 1004 and are guided to a photoelectric converter unit 1005. The photoelectric converter unit 1005 separates and extracts the two polarized light components and converts the separated polarized light components into electrical signals.

An image signal output from the photoelectric converter unit 1005 as the electrical signal is converted by the image processing apparatus 500 into an image signal for a CRT display unit or for a recorder.

When the two polarized light components X and Y propagate through the barrel 1004, both of their polarization azimuths are subjected to shift. Due to this shift, when the two polarized light components are incident on the photoelectric converter unit 1005, the X-polarized light component for the left-eye image becomes a Y-direction component, and the Y-polarized light component for the right-eye image is imparted with an X-direction component. Accordingly, the image detected by a photoelectric converter unit 1005L is a left-eye image mixed with a right-eye image, and the image detected by a photoelectric converter unit 1005R is a right-eye image mixed with a left-eye image. The image processing apparatus 500 performs image processing to compensate for this crosstalk phenomenon.

The microscope system in Fig. 1A shows the principle arrangement, and its arrangement accordingly has many variations. For example, although the polarization filter unit 1002 is arranged before the objective lens 1003 in Fig. 1A, it may be arranged after the objective lens 1003.

Various embodiments of the microscope system of the present invention will be described in detail.

〈First Embodiment〉

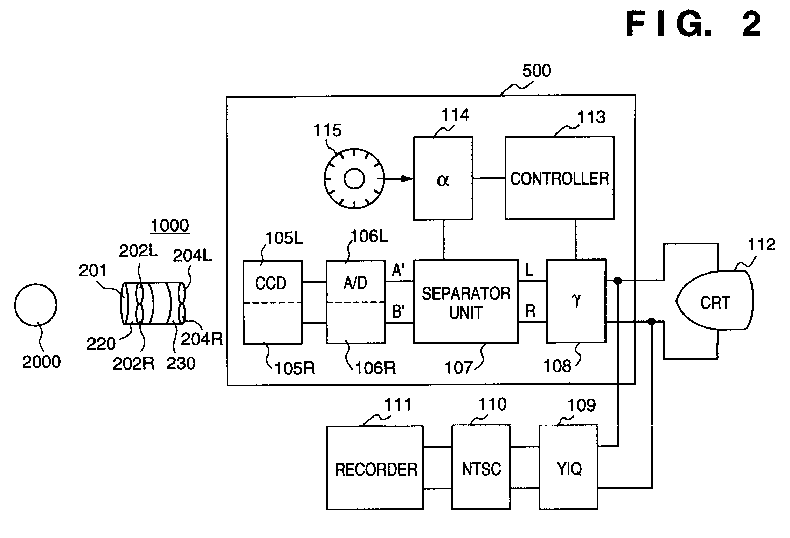

In Fig. 2, reference numeral 1000 denotes a microscope; 2000, an observation target object; and 500, an image processing apparatus. The image processing apparatus 500 performs image processing to solve the problem of shift of the polarization axis of polarized light that propagates through the microscope. The microscope 1000 in Fig. 2 has a specific phase shifter 201 that solves the problem of unbalance in intensity between the two polarized light components of image light which is incident on the microscope 1000. This phase shifter 201 corresponds to the light amount equalizer unit 1001 of the system shown in Fig. 1A.

In the system shown in Fig. 2, the image of the observation target object 2000 is guided. The image signal of this image is processed by the image processing apparatus 500, displayed on a CRT 112, and (or) stored in a recorder 111 in the NTSC format.

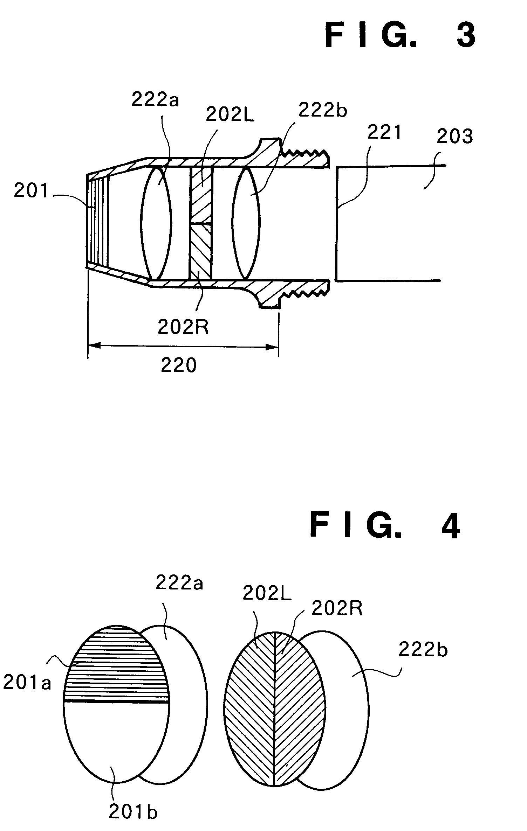

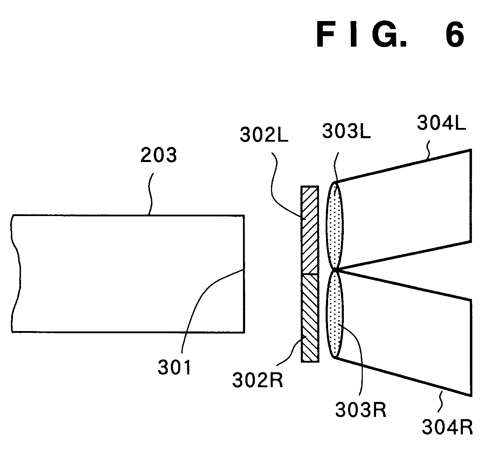

An incident portion 220 is provided to one end of the microscope 1000, and an exit portion 230 is provided to the other end of the microscope 1000. The arrangement of the incident portion 220 is shown in Figs. 3 and 4 in detail, and the arrangement of the exit portion 230 is shown in Fig. 6.

As shown in the drawings, the incident portion 220 is provided with the phase shifter 201 for correcting the intensity distribution and two polarization filters 202L and 202R for separating image light passing through the phase shifter 201 into left- and right-eye image light components. The filters 202L and 202R respectively separate light polarized in the X direction (to be referred to as an X-polarized light component hereinafter for the sake of simplicity) and light polarized in the Y direction (the Y direction is perpendicular to the X direction; to be referred as a Y-polarized light component hereinafter for the sake of simplicity), that emerge from the object 2000 as the observation target, from each other, and guide them into a barrel 203. These polarized light components propagate through the barrel 203 and reach photodetectors 204L and 204R of the exit portion 230. The X-polarized light component (left-eye image) and the Y-polarized light component (right-eye image) separated by the photodetectors 204L and 204R are respectively converted into electrical signals by CCDs 105L and 105R, and then into digital image signals A' and B' by A/D converters 106L and 106R. The CCDs 105L and 105R have RGB filters (not shown). Accordingly, the digital image signals A' and B' have R, G, and B components. A separator unit 107 extracts left- and right-eye image signals L and R, generated through the filters 204L and 204R, from the digital image signals A' and B' such that they are separated from each other. A γ-correction unit 108 corrects the signals L and R so that they become suitable for the human eye.

To observe the image signals L and R on the CRT 112, these image signals are displayed on the CRT 112 through a stereoscopic image controller 113. To store the image signals L and R in the recorder 111, the signals L and R in the form of the RGB expression are converted into YIQ-system signals by a circuit 109, and then into the NTSC format by a circuit 110.

Figs. 3 and 4 show the arrangement of the incident portion 220. In Figs. 3 and 4, the filters 202L and 202R having two polarizing surfaces halved in a direction A and an objective lens 222a are provided behind the phase shifter 201. The objective lens 222a is provided between the phase shifter 201 and the filters 202L and 202R. An enlarging lens 222b is provided behind the filters 202L and 202R. More specifically, the pair of polarization filters 202L and 202R are sandwiched between the objective lens 222a and the enlarging lens 222b. The objective lens 222a and the enlarging lens 222b employ a GRIN (GRadation INdex) lens. The objective lens 222a and the enlarging lens 222b correspond to the objective lens 1003 of the system shown in Fig. 1A. The polarization filters 202L and 202R are located at the stop of the objective lens 222a, i.e., at the effective center serving as the aperture in the direction of the optical axis or in its vicinity. The polarization azimuth of each of the pair of polarization filters 202L and 202R is the right angle. For the sake of descriptive convenience, the polarization azimuth of the polarization filter 202L will be referred to as the X direction, and that of the polarization filter 202R will be referred to as the Y direction. The pair of polarization filters 202L and 202R are disposed such that their horizontal planes perpendicular to the optical axis are divided into right and left regions. An incident surface 221 (see Fig. 3) of the barrel 203 is provided on a surface where light emerging from the object substantially forms an image through the objective lens 222a.

In place of the lens 222, a lens unit comprising a plurality of SELFOC lenses, convex lenses, or Fresnel convex lenses may be used.

The pair of polarization filters 202L and 202R have the same areas, as described above. Accordingly, if the X-axis component of polarized light incident on the left-eye filter 202L and the Y-axis component of polarized light incident on the right-eye filter 202R are equal, the intensity of the X-polarized light component incident on the lens 222b through the filter 202L and the intensity of the Y-polarized light component incident on the GRIN lens 222b through the filter 202R must be equal to each other. As described above, however, the X- and Y-polarized light components contained in the object light emerging from the object 2000 are not equal. The phase shifter 201 equalizes the X- and Y-polarized light components contained in the object light emerging from the object 2000 and causes them to be incident on the pair of polarization filters 202L and 202R. In other words, the phase shifter 201 serves as an intensity equalizer.

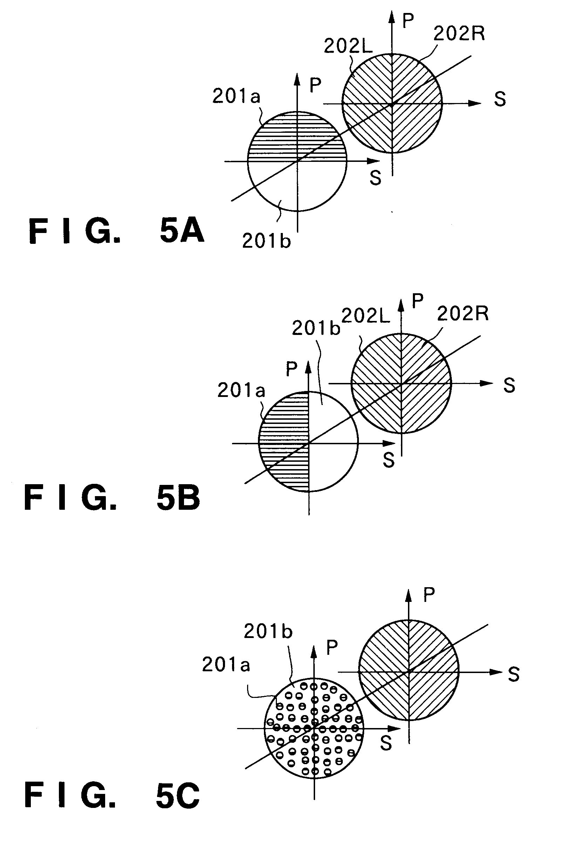

The arrangement and operation of the phase shifter 201 will be described with reference to Fig. 5A. In Fig. 5A, the phase shifter 201 has a region 201a for rotating the plane of polarization through $\lambda/2$ and a region 201b for directly transmitting light therethrough. The areas of the regions 201a and 201b of the phase shifter 201 are equal to each other. Accordingly, when arbitrarily polarized light (the polarization azimuth of which will be defined as W) is incident on the phase shifter 201 (the area and intensity of which will be defined as S and I, respectively), light emerging from the region 201a having an area of S/2 is directly incident on the polarization filter 202 with an azimuth of W + 90° (with an intensity of I/2). Similarly, light emerging from the region 201b having an area of S/2 is incident on the polarization filter 202 with an azimuth of W (with an intensity of I/2). As described above, since the polarization filters 202L and 202R have polarization azimuths that are shifted from each other by 90°, even if the azimuth W is arbitrary, the light intensity of the X-direction component transmitted through the polarization filter 202L and the light intensity of the Y-direction component transmitted through the polarization filter 202R become equal to each other.

The intensities of the two polarized light components reaching the photodetectors 204L and 204R are adjusted to be equal in this manner. Thus, the intensity of light (left-eye image light) passing through the filter 202L and the intensity of light (right-eye image light) passing through the filter 202R become equal to each other regardless of the polarized state of light emerging from the object 2000. Therefore, the unbalance in intensity is solved by the phase shifter 201.

Figs. 5B and 5C show modifications of the arrangement of the phase shifter 201 shown in Fig. 5A.

More specifically, in a phase shifter 201 of the modification shown in Fig. 5B, a dividing line that divides regions 201a and 201b is set to be parallel to a dividing line that divides polarization filters 202L and 202R.

In the modification shown in Fig. 5C, a phase shifter 201 is formed to have a plurality of small phase shifter pieces 201a each having a function of shifting the polarization azimuth of transmitted light by 90° and a plurality of small transmitting pieces 201b that do not have such a function (that directly transmit light therethrough). In this case, the total area of the plurality of phase shifter pieces 201a and the total area of the plurality of transmitting pieces 201b are set to be equal to each other.

In the examples shown in Figs. 5A to 5C, the polarization filters 202L and 202R are orthogonal. However, the present invention is not limited to these filters 202.

More specifically, the phase shifter 201 shown in Figs. 5A to 5C partially rotates the polarization azimuth of incident light. The object of the present invention can also be achieved by making the phase shifter 201 with a material that cannot maintain the polarized state of the incident light, i.e., a material that successively shift the polarization azimuth of polarized light transmitting therethrough, in place of making the phase shifter 201 to rotate the polarization axis. More specifically, when such a material is used, the plane of polarization of light passing through the phase shifter 201 becomes nonuniform, so that the intensity of light passing through the filter 202L and the intensity of light passing through the filter 202R become equal to each other.

Fig. 6 shows the arrangement of the exit portion 230 of the microscope 1000 of the first embodiment.

More specifically, reference numeral 301 denotes an exit surface through which light emerges from the barrel 203; and 302L and 302R, polarization filters (corresponding to the photodetectors 204 of Fig. 2). The polarization filters 302L and 302R are arranged parallel to each other so that light transmitting through the microscope 1000 is incident on them. Television cameras 304L and 304R are arranged behind the filters 302L and 302R, respectively.

With this arrangement, two polarized light components propagating through the barrel 203 are separated by the filters 302L and 302R and converted into electrical signals by the CCDs 105 (Fig. 2) through imaging lenses 303L and 303R.

The polarization azimuth of polarized light which is incident on the barrel 203 through the incident portion 220 shifts while the light propagates in the barrel 203. Due to this shift, crosstalk occurs in images observed with the right and left eyes, as described above. The image processing apparatus 500 performs image processing to prevent this crosstalk. The principle of crosstalk prevention is as follows.

Light emerging from the object 2000 includes various polarized light components and forms an image on the polarization filter 202 through an imaging lens 222a. As described above, the filters 202L and 202R separate, of the various polarized light components, the X- and Y-polarized light components and guide them into the barrel 203. Accordingly, the left-eye image light L as the X-polarized light component and the right-eye image light R as the Y-polarized light component mixedly exist in the barrel 203. As the X- and Y-polarized light components are orthogonal, they can originally be separated by the photodetectors 204L and 204R. In practice, however, since the polarization azimuths of the right-eye image polarized light X and left-eye image polarized light Y are set such that the right-eye image polarized light X and the left-eye image polarized light Y disperse while they are transmitted in the lens barrel, the planes of polarization wave of polarized images that are separated by the photodetectors 204L and 204R do not coincide. More specifically, although the X (Y)-polarized light for the left (right)-eye image emerging from the polarization filter 202L (202R) is linearly polarized light immediately after it emerges from the polarization filter 202L (202R), its plane of polarization shifts while it propagates and becomes to have a Y (X)-polarized light component. In other words, the photodetector 204L for the left-eye image detects the X-polarized light component emerging from the polarization filter 202L and the X-polarized light component which is generated upon shift of the Y-polarized light component emerging from the polarization filter 202R and which causes crosstalk. Similarly, the photodetector 204R for the right-eye image detects the Y-polarized light component emerging from the polarization filter 202R and the Y-polarized light component which is generated upon shift of the X-polarized light component emerging from the polarization filter 202L and which causes crosstalk. As a result, a right-eye image signal is mixed in a left-eye image signal detected by the photodetector 204L, and a left-eye image signal is mixed in a right-eye image signal detected by the photodetector 204R. The separator unit 107 described above purely separates the right- and left-eye image signals from each other.

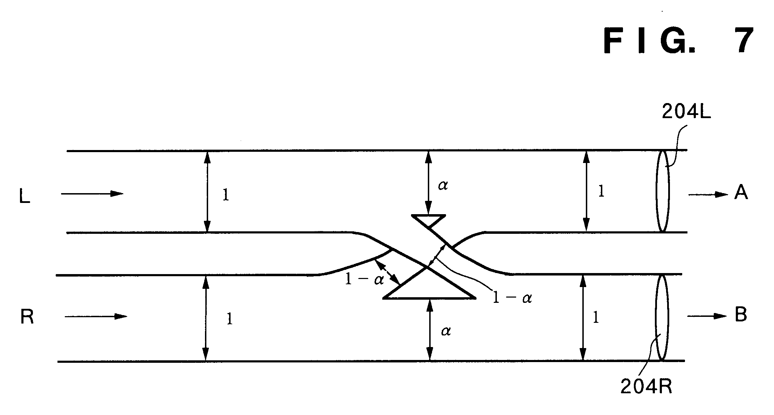

Fig. 7 schematically shows the mixed state of light in the barrel 203. In Fig. 7, although the polarized light component L (X-polarized light component) and the polarized light component R (Y-polarized light component) are separate from each other, they actually overlap each other since both of them are waves.

A polarized light component separated by the photodetector 204L is denoted by reference symbol A, and a polarized light component separated by the photodetector 204R is denoted by reference symbol B. Under an assumption that the light behaves like particles in the optical path, if $(1 - \alpha)\%$ of the polarized light component L overlaps the polarized light component R and $(1 - \alpha)\%$ of the polarized light component R overlaps the polarized light component L, that is, if the ratio with which the barrel 203 maintains the polarized light of light passing therethrough is defined as $\alpha$, from Fig. 7, A and B are expressed as

$$A = \alpha \cdot R + (1 - \alpha) \cdot L \qquad (1)$$

$$B = \alpha \cdot L + (1 - \alpha) \cdot R \qquad (2)$$

where $\alpha$ satisfies $0 \leq \alpha \leq 1$ and $\alpha \neq 0.5$ and expresses characteristics determined by conditions of various types of optical systems (e.g., the lens 222), such as a material M, a lens number N, and a diameter of the systems used in the barrel 203.

Accordingly, from equations (1) and (2), L and R are expressed as:

$$L = \frac{A \cdot \alpha}{2\alpha - 1} - \frac{B \cdot (1-\alpha)}{2\alpha - 1}$$

$$R = \frac{B \cdot \alpha}{2\alpha - 1} - \frac{A \cdot (1-\alpha)}{2\alpha - 1}$$

Note that the polarized light components A and B are light components incident on the CCDs 105L and 105R, respectively, and the signals received by the separator unit 107 are electrical signals A' and B' output from the CCDs 105L and 105R. Generally, a linear relationship is not established between the intensity of light incident on a CCD and an output voltage of the CCD. Accordingly, the output voltages A' and B' of the A/D converters 106L and 106R cannot be directly applied in equations (3) and (4).

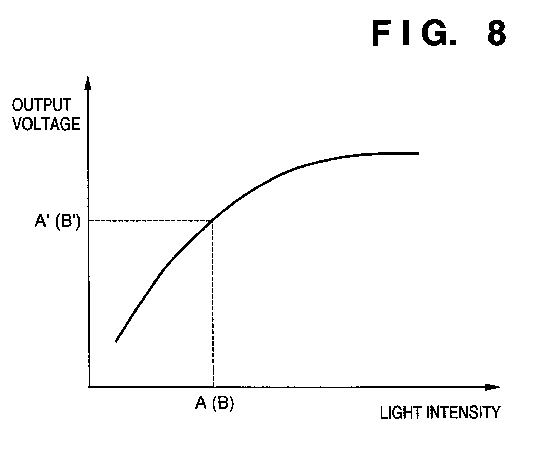

Fig. 8 shows the relationship between incident light component A to the CCD and the output voltage A' of the CCD. As this relationship is known, if the output voltages A' and B' of the CCDs 106 can be measured, the intensities of incident light components A and B to the CCDs 106 can be estimated based on the relationship of Fig. 8. The separator unit 107 quantitatively separates and extracts polarized light components L and R by applying the incident light intensities of the light components A and B to equations (3) and (4).

In practice, if the separator unit 107 is a ROM or a table that outputs the results of the arithmetic operation of equations (3) and (4), size reduction and increase in speed of the apparatus can be achieved.

Equations (1) and (2) indicate that, when a proportion is defined with which the polarized state of a bundle (ø) of light which is being transmitted through the barrel is maintained by weighting of $\alpha$, this bundle can be distributed into a bundle $(\alpha \cdot \emptyset)$ of light whose polarized state is maintained and a bundle $(1 - \alpha \cdot \emptyset)$ of light whose polarized state is not maintained. Accordingly, the arithmetic operation in accordance with equations (3) and (4) is called "weighted difference" (or proportional distribution).

The coefficient $\alpha$ is stored in the recorder 111 shown in Fig. 2 in advance. Usually, the user inputs the material M, lens count N, lens shape, and the like of the optical system through a predetermined user interface. The controller 113 searches the recorder 111 based on the above values and reads the target $\alpha$ from the recorder 111.

When the system has a display unit, e.g., the CRT 112, as in the system shown in Fig. 2, the user can visually observe the image sensed by the camera in the real-time manner. In this case, the user changes the value $\alpha$ by operating a dial switch 115 while observing the image on the CRT 112 so that the optimum stereoscopic images can be obtained.

In the above embodiment, stereoscopic images are received in a single optical system. However, the present invention can similarly be applied to a microscope in which images are received by a plurality of optical systems and are transferred by one optical transfer system, as a matter of course.

As described above, according to the microscope of the first embodiment, even when light to be incident itself is polarized, this polarization can be solved by equalizing the polarized states of the incident light components. Hence, the obtained left- and right-eye images are substantially equalized in intensity. Since shift of the plane of polarization of light propagating through the barrel is compensated for, occurrence of crosstalk is prevented.

The output characteristics of the CCDs 105L and 105R sometimes have linearity depending on the intensity of incident light. If the intensity of the polarized image falls within a range that guarantees the linearity of the CCDs 105, the inversion described above is not necessary.

(Second Embodiment)

Various types of microscope systems of the present invention will be introduced by explaining a microscope system according to the second embodiment.

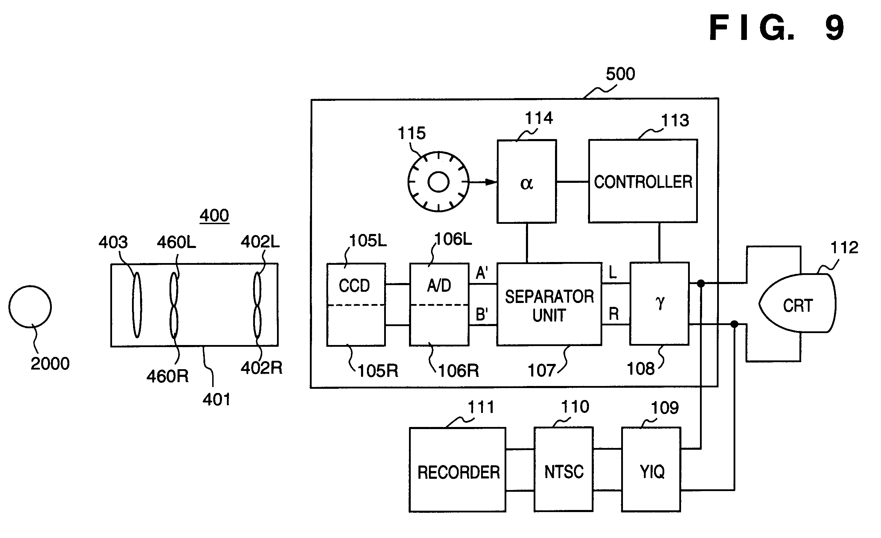

Fig. 9 is a schematic diagram showing the arrangement of the microscope system according to the second embodiment. The system of the second embodiment is obtained by removing the light amount equalizer unit 1001 from the microscope 1000 shown in Fig. 1A, thereby making the arrangement of the second embodiment simpler than the microscope 1000 of Fig. 1A. More specifically, referring to Fig. 9, reference numeral 400 denotes an objective lens unit corresponding to the microscope 1000 of Fig. 1A. In other words, the objective lens unit 400 has an objective lens 403, a pair of polarization filters 460, and a pair of photodetectors 402 that are accommodated in a barrel (i.e., an optical path) 401. The objective lens 403 corresponds to the objective lens 1003 of Fig. 1A. In the system shown in Fig. 9, the image of an observation target object 2000 is guided to an image processing apparatus 500 through the barrel 401, displayed on a CRT 112, and (or) stored in a recorder 111 in the NTSC format.

An imaging optical system (not shown) is provided to one end of the barrel 401, and two polarization filters 460L and 460R are also provided to one end of the barrel 401, as shown in Fig. 9. The filters 460L and 460R provided in the objective lens unit 400 respectively separate light polarized in the X direction (to be referred to as an X-polarized light component hereinafter for the sake of simplicity) and light polarized in the Y direction (the Y direction is perpendicular to the X direction; to be referred as a Y-polarized light component hereinafter for the sake of simplicity), that emerge from the object 2000 as the observation target, from each other, and guide them into the barrel 401. These polarized light components propagate through the barrel 401 and reach two separate photodetectors 402L and 402R. The X-polarized light component (left-eye image) and the Y-polarized light component (right-eye image) separated by the photodetectors 402L and 402R are respectively converted into electrical signals by CCDs 105L and 105R, and then into digital image signals A' and B' by A/D converters 106L and 106R. The CCDs 105L and 105R have RGB filters (not shown). Accordingly, the digital image signals A' and B' have R, G, and B components. A separator unit 107 extracts left- and right-eye image signals L and R, generated by the filters 460L and 460R, from the digital image signals A' and B' such that they are separated from each other. A γ-correction circuit 108 corrects the signals L and R so that they become suitable for the human eye.

To observe the image signals L and R on the CRT 112, these image signals are displayed on the CRT 112 through a stereoscopic image controller 113. To store the image signals L and R in the recorder 111, the signals L and R in the form of the RGB expression are converted into YIQ-system signals by a circuit 109, and then into the NTSC format by a circuit 110.

As described above, the image light component L as the X-polarized light component and the image light component R as the Y-polarized light component mixedly exist in the barrel 401. As the X- and Y-polarized light components are orthogonal, they can originally be separated by the photodetectors 402L and 402R. In practice, however, since the polarization azimuths of the right-eye image polarized light component X and left-eye image polarized light component Y are set such that the right-eye image polarized light component X and the left-eye image polarized light component Y disperse while they are transmitted in the lens barrel 401, the planes of polarization wave of polarized images that are separated by the photodetectors 402L and 402R do not coincide. More specifically, the plane of polarization of the X-polarized light component shifts so that the X-polarized light component becomes a Y-polarized light component, and the plane of polarization of the Y-polarized light component shifts so that the Y-polarized light component becomes an X-polarized light component. As a result, a left-eye image signal is mixed in a right-eye image signal detected by the photodetector 402R. The separator unit 107 described above purely separates the right- and left-eye image signals from each other.

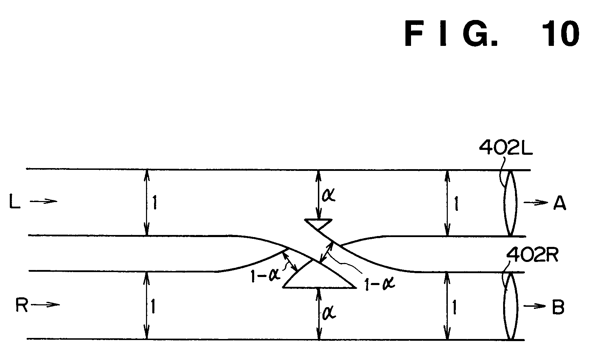

Fig. 10 schematically shows the mixed state of light in the barrel 401. In Fig. 10, although the polarized light component L (X-polarized light component) and the polarized light component R (Y-polarized light component) are illustrated as separate from each other, they actually are superposed with each other since both of them are waves.

Therefore, the separator unit 107 that performs image processing in accordance with equations (3) and (4) is employed in the objective lens unit 400 of the second embodiment as well in the same manner as in the first embodiment, thereby preventing a crosstalk.

Output characteristics of the CCDs 105L and 105R sometimes have linearity depending on the intensity of incident light. If the intensity of the polarized image falls within a range that guarantees the linearity of the CCDs 105, the inversion described above is not necessary.

The practical arrangement of the microscope of the second embodiment will be described in more detail.

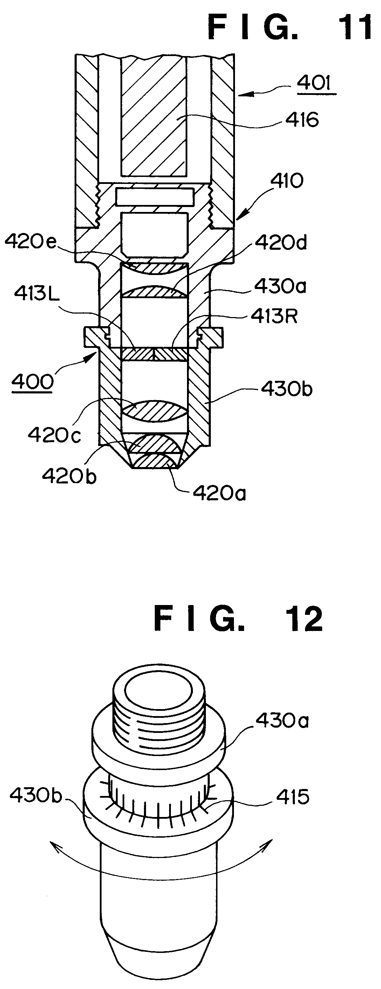

Fig. 11 is a sectional view showing the arrangement of the objective lens unit 400 and the barrel 401 of the stereoscopic microscope shown in Fig. 9, and Fig. 12 is a perspective view of the objective lens unit of this stereoscopic microscope. The objective lens unit 400 is fixed with a stand (not shown). The objective lens unit 400 and the barrel 401 are threadably engaged with and fixed to each other, so that an image obtained by the objective lens unit 400 is formed on the end face of an optical path 416.

The optical path 416 may be formed by, e.g., a relay lens group.

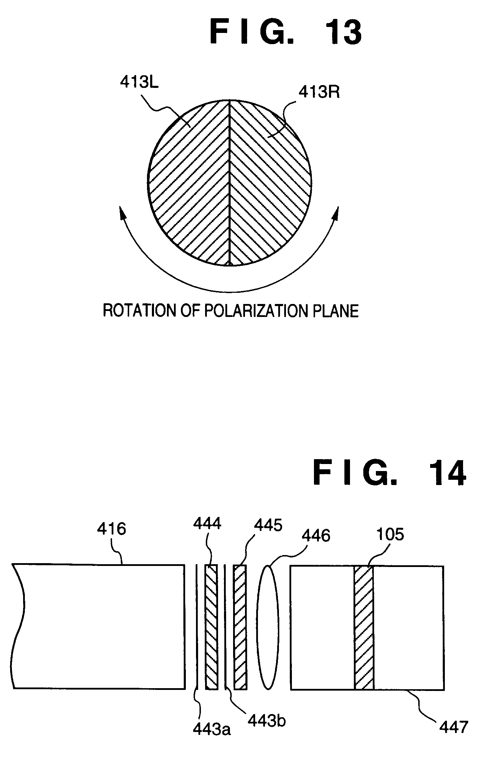

As shown in Fig. 11, lenses 420a to 420e are provided in the barrel of the objective lens unit 400. Two polarization filters 413L and 413R are provided side by side between the lenses 420d and 420c, as shown in Fig. 13. The positions of the filters 413 in the optical axis are set at the effective center serving as the aperture of the objective lens group in the direction of the optical axis, or in its vicinity. The polarization azimuths of the two filters 413L and 413R are orthogonal, and will be defined as X and Y directions, respectively, for the sake of descriptive convenience. A plane that divides the polarization filters 413L and 413R is perpendicular to the optical axis of the barrel 401 and includes this optical axis. Accordingly, light that transmit through the polarization filters 413L and 413R are respectively X-and Y-polarized light. More specifically, the optical images of the X- and Y-polarized light components respectively passing through the polarization filters 413L and 413R are formed on the interface of a fiber 416. Thus, a parallax image existing in the effective aperture of the objective lens unit 400 can be converted into two polarized images, and the two polarized images can be transferred to the image output side through one optical system (420, 416) in the housing of the microscope.

The objective lens unit 400 is divided into barrels 430a and 430b. The lenses 420a to 420c and the polarization filters 413L and 413R are held by the barrel 430b, and the lenses 420d and 420e are held by the barrel 430a. The barrel 430b can be rotated relative to the barrel 430a about its optical axis as the center. Accordingly, as shown in Fig. 13, the polarization filters 413L and 413R are pivotal about the optical axis as the center. More specifically, when the barrel 430b is held and rotated, the planes of polarization of the polarization filters 413L and 413R are rotated.

The barrels 430a and 430b of the objective lens unit 400 are formed with scales 415. From these scales 415, the user can confirm the number of turns through which the planes of polarization have been rotated.

The lens portion 420 may employ an ordinary convex lens, a Fresnel convex lens, or a plurality of lenses. The positions, sizes, and shapes of the lens portion 420 and the polarization filters are arbitrary as far as they are within the spirit and scope of the present invention.

Although the polarization azimuths of the polarization filters 413 are preferably the right angle, they are not particularly limited as far as they are different from each other.

Fig. 14 is a sectional view showing the arrangement of the exit side of the microscope of the second embodiment. As shown in Fig. 9, the objective lens unit 400 guides two polarized light components whose polarization azimuths are orthogonal into the optical path 416.

Transparent electrodes 443a and 443b are provided behind the optical path 416, and a liquid crystal device 444 is sandwiched between the transparent electrodes 443a and 443b. A photodetector 445 (corresponding to the photoelectric converter unit 1005 in Fig. 1A or the photodetectors 402 in Fig. 9) is provided behind the transparent electrode 443b.

The polarization azimuth of the liquid crystal device 444 can be changed by controlling the voltage applied to the transparent electrodes 443a and 443b. More specifically, the liquid crystal device 444, the transparent electrodes 443a and 443b, and the polarization filter 445 serving as the photodetector serve as a "light valve" that transmits only the X-polarized light component upon application of the first predetermined voltage to the electrodes 443a and 443b and only the Y-polarized light component upon application of the second predetermined voltage different from the first voltage.

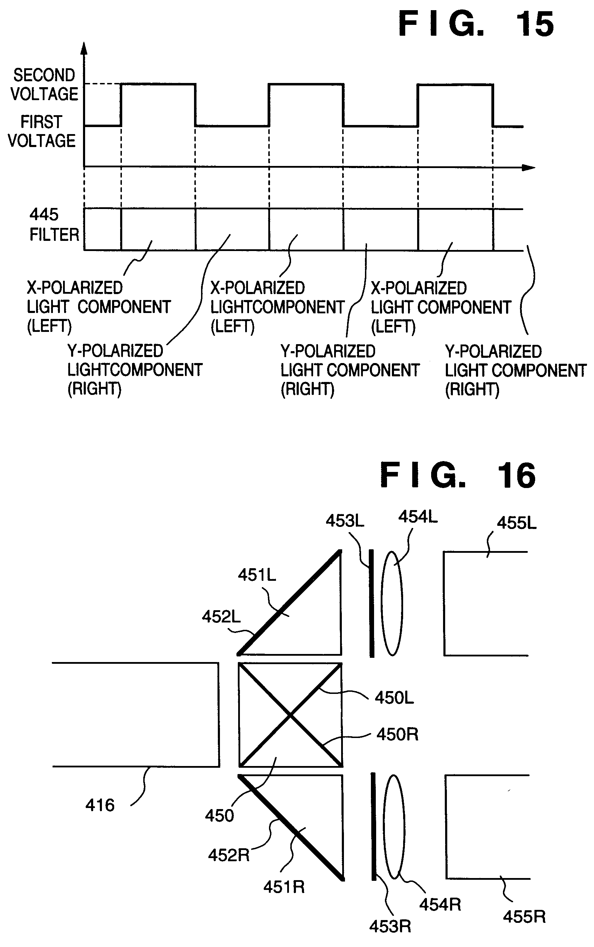

Fig. 15 shows the relationship among the timings of the first and second voltages described above and the timing of output light emerging from the polarization filter 445. More specifically, when the first and second voltages as signals output from the stereoscopic image controller 113 (Fig. 9) are controlled, X-polarized light component (left-eye image light component) and Y-polarized light component (right-eye image light component) are sequentially output from the filter 445 in the time-interlace manner.

In the microscope of this embodiment, since the time-interlace scheme is employed as described above, two CCDs are not required, and one CCD 105 suffices, as shown in Fig. 14. Referring to Fig. 14, reference numeral 447 denotes a television camera having in it the CCD 105 that forms an optical image. Then, the CCD 105 alternately outputs two image signals A' and B' in synchronism with sync signals.

The separator unit 107 extracts the separated image signals L and R based on these image signals A' and B', as described above.

When the microscope of this embodiment is used, left- and right-eye images are alternately generated, as shown in Fig. 15. If the left- and right-eye images are alternately displayed on the CRT 112 in the time-interlace manner, flicker undesirably occurs. When the time-interlace left- and right-eye images are recorded in the recorder 111, the recording efficiency is degraded. Hence, to convert image signals obtained by using the system of the second embodiment into image signals that are arranged in the time-parallel manner, a known synchronizing unit may be used. In this case, conversion of time-interlace signals into time-parallel signals may be performed before "weighted difference" processing.

Fig. 16 shows the arrangement of a modification of the example of the Fig. 14 of the exit side of the microscope of the second embodiment.

Referring to Fig. 16, reference numeral 450 denotes a beam splitter; 451L and 451R, prisms; 452L and 452R, reflecting surfaces formed on the respective prisms; 453L and 453R, photodetectors (corresponding to the photodetectors 402 of Fig. 9); 454L and 454R; lenses; and 455L and 455R, television cameras. The beam splitter 450 is obtained by adhering four prisms, and has two reflecting surfaces 450L and 450R.

More specifically, two polarized images passing through the main body of an optical path 416 is divided into two optical paths by the beam splitter 450. Light of each optical path includes two polarized images. The light components of two systems each including the two polarized images are respectively incident on the prisms 451L and 451R, are reflected by the reflecting surfaces 452L and 452R, and are incident on the polarization filters 453L and 453R. The polarization filters 453L and 453R are set in advance such that they transmit, of the two polarized light components, only the X- and Y-polarized light components, respectively.

Accordingly, the camera 455L senses the left-eye image including the X-polarized light component, and the camera 455R senses the right-eye image including the Y-polarized light component. The images sensed by the cameras 455L and 455R are input to the image processing apparatus shown in Fig. 9, and are subjected to the weighted difference processing described above. Due to this weighted difference processing, even if a light component which has been the Y (X)-polarized light component in the objective lens unit 400 is included in the X (Y)-polarized light component separated by the filter 453L (453R), the separator unit 107 extracts the left-eye image (X-polarized light component) detected by the objective lens unit 400 and the right-eye image (Y-polarized light component) detected by the objective lens unit 400, as described above.

In this manner, a pair of stereoscopic images in which the right- and left-eye images are completely separated from each other can be obtained with the microscope shown in Fig. 16 as well.

When the beam splitter 450 can select polarization of two polarized images, the polarization filters 453L and 453R are not necessary.

In Fig. 16, the beam splitter 450 having two reflecting surfaces and prisms each having one reflecting surface are provided so that exit light is collimated. In some cases, however, one optical path may be perpendicular to the other. In this case, an ordinary beam splitter (that transmits the X-polarized light component and reflects the Y-polarized light component) may be used.

As described above, according to the system of the second embodiment, two high-precision image data can be obtained from images that are obtained by one light transfer optical member (e.g., an optical lens) which transfers two polarized images having a parallax, by employing proportional distribution (weighted difference processing). In other words, this proportional distribution (weighted difference processing) enables use of an ordinary inexpensive microscope.

When the coefficient ($\alpha$) for the proportional distribution (weighted difference processing) is determined or stored in advance, the operability of the microscope can be improved.

Image processing of the second embodiment enables use of microscopes having various arrangements.

The objective adapter of the microscope of the second embodiment is suitable for the above microscope and can adjust the angle of the plane of polarization.

⟨Third Embodiment⟩

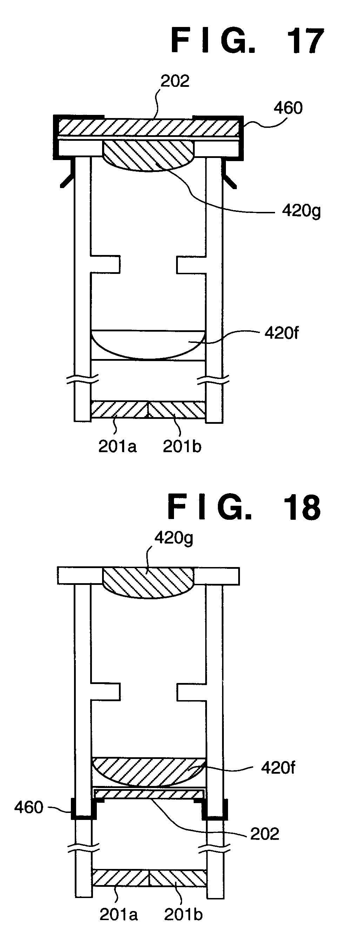

The microscopes of the third embodiment (Figs. 17, 18, and 19) are obtained by modifying the objective lens unit 400 of the microscope of the first embodiment.

More specifically, an optical unit (objective lens unit) 400 of Fig. 17 according to the third embodiment has an objective lens 420f, an eyepiece 420g, a phase shifter 201, and a polarization filter 202. The phase shifter 201 has a region 201a comprising a $\lambda/2$ plate that transmits incident light by shifting its plane of polarization by 90°, and a region 201b that transmits incident light without shifting its plane of polarization, in the same manner as in the first embodiment shown in Fig. 4. The characteristic feature of the third embodiment resides in that the polarization filter 202 is arranged close to the eyepiece 420g by using a retainer 460. The polarization filter 202 consists of two regions, i.e., a region for transmitting only the X-polarized light component and a region for transmitting only the Y-polarized light component, in the same manner as in the first embodiment.

Fig. 18 shows the first modification of the third embodiment. The characteristic feature of the first modification resides in that a polarization filter 202 is arranged close to an objective lens 420f.

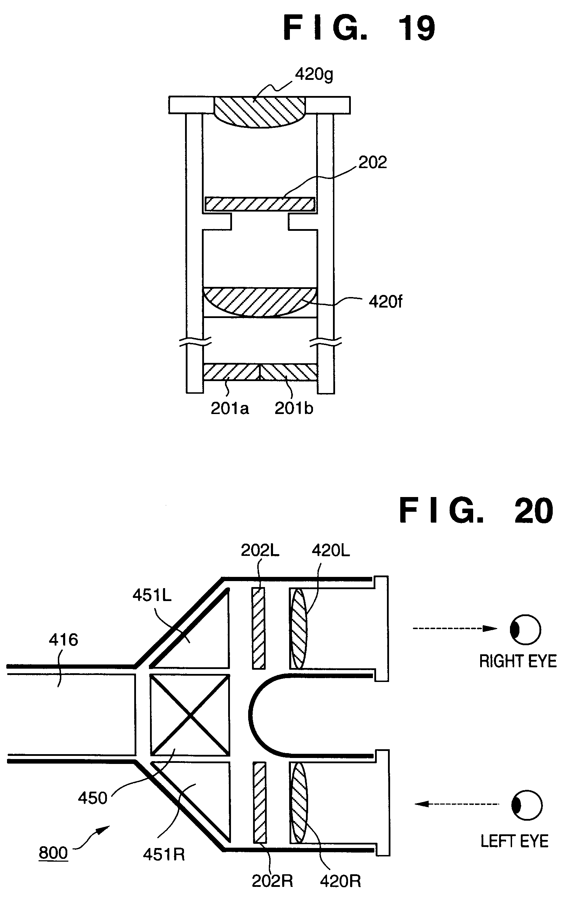

Fig. 19 shows the second modification of the third embodiment. The characteristic feature of the second modification resides in that a polarization filter 202 is provided between an objective lens 420f and an eyepiece 420g.

⟨Fourth Embodiment⟩

In the microscope system of the first embodiment, both the scheme of equalizing the light intensities and image processing for preventing crosstalk caused by shift of the plane of polarization are employed. The second embodiment provides a microscope system which employs only image processing for preventing crosstalk caused by shift of the plane of polarization. In both systems of the first and second embodiments, the image of a target object is displayed on a CRT display or is recorded in a recorder. The fourth embodiment which will be described hereinafter provides a microscope that allows the observer to directly observe, with his eyes, an image which is obtained from image light emerging from the observation target and which is not subjected to image processing described above. More specifically, both in the first and second embodiments, image light is photoelectrically converted and then converted into RGB image data, thereby obtaining a visual image. In contrast to this, with the microscope of the fourth embodiment, image light emerging from an objective lens unit 400 can be directly seen with the observer's eyes. For this reason, the system of the fourth embodiment does not perform image processing and thus does not have a function of preventing crosstalk caused by shift of the plane of polarization. As far as the number of optical systems used in the optical path of the microscope is decreased or shift of the plane of polarization is prevented, only equalization of the light intensities need be performed, which is the first function, and no problem occurs in practice.

The characteristic feature of the fourth embodiment resides in that an eyepiece unit 800 shown in Fig. 20 is used. In the eyepiece unit 800 shown in Fig. 20, light in which X- and Y-polarized light components overlap is separated into two optical paths by using optical prisms 450, 451L, and 451R, and one optical path is guided to a (left-eye) polarization filter 202L while the other optical path is guided to a (right-eye) polarization filter 202R. A left-eye eyepiece 420L is provided behind the filter 202L, and a right-eye eyepiece 420R is provided behind the filter 202R. In the fourth embodiment, since the polarization filters 202 are provided on the eyepiece side in this manner, a unit obtained by removing the filter 202 from the objective lens unit 400 (Fig. 3) of the first embodiment can be used as the objective lens unit of the fourth embodiment.

⟨Fifth Embodiment⟩

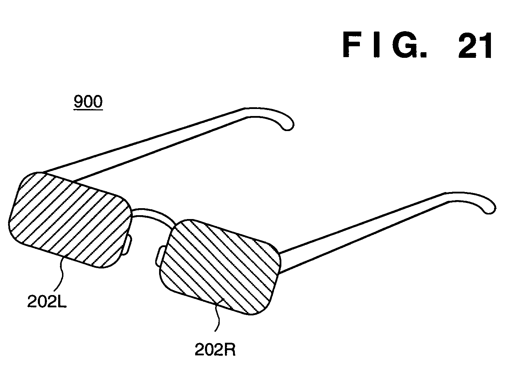

Fig. 21 shows glasses which are worn by the observer who uses a microscope of the fifth embodiment. Polarization filters 202L and 202R are respectively mounted on the lenses of glasses 900 shown in Fig. 21. These glasses 900 have polarization filters for separating right- and left-eye images from each other. Hence, as the eyepiece unit of the microscope system using this glasses 900, a modification of the eyepiece unit of the fourth embodiment can be employed, i.e., one obtained by removing the filters 202L and 202R from the eyepiece unit 800 shown in Fig. 20 can be employed. As the objective lens unit, one obtained by removing the polarization filters from the objective lens unit of the first embodiment is employed.

In all of the embodiments described above, stereoscopic images are received in a single optical system. However, the present invention can similarly be applied to a microscope in which images are received by a plurality of optical systems and are transferred by one optical transfer system, as a matter of course.

As many apparently widely different embodiments of the present invention can be made without departing from the spirit and scope thereof, it is to be understood that the invention is not limited to the specific embodiments thereof except as defined in the appended claims.

**Claims**

1. An image processing apparatus for a microscope having an optical system that transfers first and second image light components which have a parallax therebetween and which can be separated from each other, characterized by comprising:
   coefficient determining means (114, 115) for determining a predetermined coefficient based on a shape of said optical system;
   converting means (105, 106) for converting the first and second image light components into first and second image signals; and
   generating means (107) for generating first and second image data by performing proportional distribution of the first and second image signals in accordance with the predetermined coefficient.

2. The apparatus according to claim 1, wherein the predetermined coefficient is expressed as a function of a material of said optical system.

3. The apparatus according to claim 2, wherein the predetermined coefficient is expressed as a function of a diameter of said optical system.

4. The apparatus according to claim 1, wherein the optical system comprises relay lenses, and the predetermined coefficient is stored in storage means in advance as a function value having a number of said relay lenses as a parameter.

5. The apparatus according to claim 1, wherein said converting means has image sensing elements for converting the first and second image light components into the first and second image signals as electrical signals, respectively, and said generating means has inverting means for inverting the first and second image signals sent from said image sensing element into first and second light intensity data representing light intensities, and means for performing proportional distribution of the light intensity data in accordance with the predetermined coefficient.

6. The apparatus according to claim 1, wherein the first and second image light components in said optical system are polarized substantially differently from each other.

7. The apparatus according to claim 1, further comprising means for storing or displaying the first and second image data.

8. A microscope apparatus having a microscope (1000, 400) having an optical system (222) that transfers first and second image light components which have a parallax therebetween and which can be separated from each other, said apparatus characterized by comprising:
   coefficient determining means (114, 115) for determining a predetermined coefficient based on a shape of said optical system;
   converting means (105, 106) for converting the first and second image light components into first and second image signals; and
   generating means (107) for generating first and second image data by performing proportional distribution of the first and second image signals in accordance with the predetermined coefficient.

9. The apparatus according to claim 8, wherein the predetermined coefficient is expressed as a function of a material of said optical system.

10. The apparatus according to claim 9, wherein the predetermined coefficient is expressed as a function of at least one of a material and a diameter of said optical system.

11. The apparatus according to claim 8, wherein the optical system comprises relay lenses, and the predetermined coefficient is stored in storage means in advance as a function value having a number of said relay lenses as a parameter.

12. The apparatus according to claim 8, wherein
said converting means has an image sensing element for converting the first and second image light components into the first and second image signals as electrical signals, and
said generating means has inverting means for inverting the first and second image signals sent from said image sensing element into first and second light intensity data representing light intensities, and means for performing proportional distribution of the light intensity data in accordance with the predetermined coefficient.

13. The apparatus according to claim 8, wherein the first and second image light components in said optical system are polarized substantially differently from each other.

14. The apparatus according to claim 8, further comprising means for storing or displaying the first and second image data.

15. The apparatus according to claim 13, wherein
said optical system of said microscope has an optical path, an incident portion provided to a distal end side of said optical path, and an exit portion provided to a proximal end side of said optical path, and
said incident portion has a pair of polarization filters which are provided at an effective center serving as an aperture in a direction of an optical axis or in a vicinity thereof, which have different polarization azimuths, and which are divisionally disposed on right and left regions of a plane substantially perpendicular to the optical axis.

16. The apparatus according to claim 15, wherein said pair of polarization filters respectively have semicircular shapes.

17. The apparatus according to claim 13, wherein
said optical system of said microscope has an optical path, an incident portion provided to a distal end side of said optical path, and an exit portion provided to a proximal end side of said optical path, and
said exit portion has polarization axis rotating means for rotating polarization axes of two polarized images passing through said optical path in a time-interlace manner, and a photodetector provided behind said rotating means.

18. The apparatus according to claim 13, wherein said optical system of said microscope has an optical path, an incident portion provided to a distal end side of said optical path, and an exit portion provided to a proximal end side of said optical path, and
said exit portion has a beam splitter for separating optical paths of two polarized images passing through said optical path, and a pair of polarization filters respectively passing the separated polarized images therethrough and having polarization azimuths different from each other.

19. A method of controlling a microscope having an optical system that transfers first and second image light components which have a parallax therebetween and which can be separated from each other, characterized by comprising the steps of:
converting the first and second image light components into first and second image signals by controlling an image sensing element; and
generating first and second image data by performing proportional distribution of the first and second image signals based on conversion characteristics of said image sensing element and a predetermined coefficient representing a shape of said optical system.

20. The method according to claim 19, wherein the predetermined coefficient is stored as a value corresponding to a geometric shape of said optical system.

21. An objective adapter of a microscope having an objective lens (420) in a barrel thereof, comprising:
a pair of polarization filters (413L, 413R) arranged side by side at an effective center serving as a stop of said objective lens in a direction of a plane perpendicular to an optical axis of said barrel; and
means (430b) for rotating said pair of polarization filters about the optical axis in said barrel as a center.

22. The adapter according to claim 21, wherein
said barrel has a first barrel portion for supporting at least said pair of polarization filters and a second barrel portion for supporting a remaining portion of said adapter, said first barrel portion being supported to be pivotal with respect to said second barrel portion, and
at least one of said first and second barrel portions is formed with a scale for aiding visual observation of a pivot amount of said first barrel portion.

23. The adapter according to claim 21, wherein said pair of polarization filters have semicircular shapes and substantially form a circle when fitted with each other.

24. The apparatus according to claim 13, further comprising equalizing means, provided in front of said pair of polarization filters, for equalizing two polarized light components of incident light.

25. The apparatus according to claim 8, further having a marker, provided in said optical system, for indicating a direction of a dividing line that halves said polarization filters.

26. A microscope (1000) for separating image light incident through an observation lens into two polarization images, propagating the two polarization images through one optical system, and using the two polarized images as two parallax images, characterized by comprising:
   equalizing means (201, 202), for equalizing two polarized light components of incident light; and
   optical means (222), provided in the rear of said equalizing means, for separating the incident light having two equalized polarized light components,
   whereby intensities of the two parallax images obtained by said optical means become equal.

27. The microscope according to claim 26, wherein said equalizing means solves polarization characteristics of the incident light.

28. The microscope according to claim 26, wherein said equalizing means has means for rotating a polarization angle of the incident light.

29. The microscope according to claim 28, wherein said equalizing means has first and second light-transmitting elements having equal areas, and said first light-transmitting element shifts a phase of a polarization azimuth of transmitted light with a shift amount which is shifted by 90° from a shift amount with which said second light-transmitting element shifts a phase of a polarization azimuth of transmitted light.

30. The microscope according to claim 29, wherein said first light-transmitting element is constituted by a semicircular λ/2 phase shifter, and said second light-transmitting element is constituted by a light-transmitting plate that does not change a semicircular phase.

31. The microscope according to claim 30, wherein said first and second light-transmitting elements are divided by a dividing line which is perpendicular to a dividing direction of said optical means.

32. The microscope according to claim 30, wherein said first and second light-transmitting elements are divided by a dividing line which is parallel to a dividing direction of said optical means.

33. The microscope according to claim 28, wherein said equalizing means has first and second light-transmitting elements having equal areas, said first light-transmitting element is constituted by a plurality of small regions, and said first light-transmitting element shifts a phase of a polarization azimuth of transmitted light with a shift amount which is shifted by 90° from a shift amount with which said second light-transmitting element shifts a phase of a polarization azimuth of transmitted light.

# F I G. 1A

CRT

RECORDER

IMAGE
PROCESSING
APPARATUS

1005L

X | Y

1005R

1004
(LIGHT-PROPAGATING PATH)

1000

(X,Y)

1003
(OBJECTIVE LENS)

(X,Y)

1002L

X↑ | ↑Y

1002R
(POLARIZATION FILTER)

↑ (X,Y)

1001

(X',Y')
$|X'| \neq |Y'|$

2000

# FIG. 1B

1002L

1002R

# F I G. 2

EP 0 715 198 A1

# F I G. 3

222a  202L  222b  221  203
201  202R
220

# F I G. 4

222a  202L  202R  222b
201a  201b

FIG. 5A

FIG. 5B

FIG. 5C

# F I G. 6

EP 0 715 198 A1

# F I G. 7

FIG. 8

# F I G. 9

F I G. 10

# F I G. 11

401
416
410
420e
413L
400
420c
420b
420d
430a
413R
430b
420a

# F I G. 12

430a
430b
415

# FIG. 13

413L    413R

ROTATION OF POLARIZATION PLANE

# FIG. 14

416    444    445    446    105

443a    443b    447

# F I G. 15

SECOND VOLTAGE

FIRST VOLTAGE

445 FILTER

X-POLARIZED LIGHT COMPONENT (LEFT)

X-POLARIZED LIGHTCOMPONENT (LEFT)

X-POLARIZED LIGHT COMPONENT (LEFT)

Y-POLARIZED LIGHTCOMPONENT (RIGHT)

Y-POLARIZED LIGHT COMPONENT (RIGHT)

Y-POLARIZED LIGHT COMPONENT (RIGHT)

# F I G. 16

453L  454L  455L

451L

452L

450L

450R

416

450

452R

451R

453R  454R  455R

# FIG. 17

# FIG. 18

# FIG. 19

# FIG. 20

# F I G. 21

900

202L

202R

**European Patent Office**

**PARTIAL EUROPEAN SEARCH REPORT**
which under Rule 45 of the European Patent Convention
shall be considered, for the purposes of subsequent
proceedings, as the European search report

**Application Number**

EP 95 40 2688

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 159 163 (DUDLEY LESLIE P) 26 June 1979 | 21,23 | G02B21/22 G02B27/26 |
| A | * the whole document * | 22,25,26 | |
| X | DE-A-33 27 672 (ZEISS CARL FA) 14 February 1985 * the whole document * | 26,27 | |
| X | DE-A-30 06 373 (NIPPON KOGAKU KK) 4 September 1980 * the whole document * | 26,27 | |
| X | DE-A-28 47 962 (OLYMPUS OPTICAL CO) 10 May 1979 * the whole document * | 26,27 | |
| A | EP-A-0 230 253 (CARTER WILLIAM JAMES) 29 July 1987 * the whole document * | 21,23, 26,28-30 | |
| A | US-A-4 111 695 (YEVICK GEORGE JOHANNUS) 5 September 1978 * figure 2 * | 33 | TECHNICAL FIELDS SEARCHED (Int.Cl.6) G02B |

## INCOMPLETE SEARCH

The Search Division considers that the present European patent application does not comply with
the provisions of the European Patent Convention to such an extent that it is not possible to carry
out a meaningful search into the state of the art on the basis of some of the claims
Claims searched completely :
Claims searched incompletely :
Claims not searched :
Reason for the limitation of the search:

see sheet C

| Place of search | Date of completion of the search | Examiner |
|---|---|---|
| THE HAGUE | 29 February 1996 | Scheu, M |

EPO FORM 1503 03.82 (P04C07)

EP 95 40 2688

-C-

INCOMPLETE SEARCH

Claims searched completely  : 21-33
Claims not searched         : 1-20

Reason : "Coefficient determining means for determining
         a predetermined coefficient based on a shape".
         "Performing proportional distribution of the first
         and second image".


LACK OF COMPREHENSIBILITY